# EUROPÄISCHE PATENTSCHRIFT

(11) **EP 2 113 471 B1**
(45) Veröffentlichungstag und Bekanntmachung des Hinweises auf die Patenterteilung: **06.06.2012**
(21) Anmeldenummer: 09157736.1
(22) Anmeldetag: 09.04.2009
(51) Int. Cl.: C10L 5/00, C10L 5/40, C10L 11/04, C10L 11/06, C10L 5/36

(54) **Packung von Brennstoffformkörpern, sowie Verfahren zum Aufbau einer Packung von Brennstoffformkörpern**
Packaging for fuel moulds and method for constructing same
Emballage de corps de formage de combustible, et procédé de montage d'un emballage de corps de formage de combustible

(30) Priorität: 30.04.2008 DE 102008021800
(43) Veröffentlichungstag der Anmeldung: 04.11.2009
(73) Patentinhaber: RWE Power Aktiengesellschaft, 45128 Essen (DE)
(72) Erfinder: Teller, Eduard, 50226 Frechen (DE); Längsfeld, Achim, 50374 Erftstadt (DE); Eid, Ludwig, 50374 Erftstadt (DE)
(74) Vertreter: Heine, Christian Klaus

(56) Entgegenhaltungen:
- WO-A1-81/03029
- DE-C- 665 574
- DE-U1-202004 001 734

## Beschreibung

Gegenstand der vorliegenden Erfindung ist eine Packung von Brennstoffformkörpern und ein Verfahren zum Aufbau von Packungen von Brennstoffformkörpern. Insbesondere findet die Erfindung Einsatz bei der Packung von Braunkohlehaltigen Brennstoffformkörpern wie Braunkohle-Briketts.

Brennstoffformkörpern wie beispielsweise Briketts werden entweder in loser Form vertrieben oder in Form von Packungen aus Brennstoffformkörpern, beispielsweise auf Paletten aufgebrachte Packungen von Brennstoffformkörpern. Insbesondere zum Vertrieb dieser Brennstoffformkörper in kleineren Mengen, beispielsweise über Baumärkte oder Lebensmittelgroßmärkte, ist es erforderlich, Packungen von Brennstoffformkörpern in definierter Form zu den Vertriebsstätten zu transportieren. Hierzu ist es bisher bekannt, solche Brennstoffformkörper zu bündeln und diese Bündel zu Packungen auf Europaletten zu stapeln und diese dann zum Kunden zu transportieren.

Hierbei ist es notwendig, die einzelnen Brennstoffformkörper zu kühlen. Aufgrund der Produktionsverfahren für diese Brennstoffformkörper weisen diese nach der Produktion eine erhöhte Temperatur im Vergleich zur Umgebungstemperatur auf. Weiterhin kommt es zur Oxidation von Brennstoff auf der Oberfläche der Brennstoffformkörper, was üblicherweise zu einer Erhöhung der Temperatur der Brennstoffformkörper führt. Steigt die Temperatur zu hoch, so führt dies gegebenenfalls zu einer Entzündung der Brennstoffformkörper, so dass hier erhöhte Sicherheitsmaßnahmen notwendig sind. Insbesondere bei warmem Wetter kann es zur Selbstentzündung der Brennstoffformkörper kommen. Um dem entgegen zu wirken ist es notwendig, den Brennstoffformkörpern die Möglichkeit zum Aus-Auskühlen zu geben. Gleichzeitig muss gewährleistet werden, dass die Brennstoffformkörper transportfähig sind, dass also eine entsprechende Packung von Brennstoffformkörpern stabil auch beispielsweise mit Lastkraftwagen oder im Bahnwaggon transportabel ist.

Aus der DE 665 574 C geht beispielsweise eine Packung von Bündeln von Brennstoffformkörpern hervor, wobei die Bündel aus drei Einzelsäulen Brikett bestehen, die durch Bindemittel umschnürt und zusammengehalten werden. Innerhalb und außerhalb der Bündel sind Kühlkanäle ausgebildet.

Der vorliegenden Erfindung liegt die Aufgabe zugrunde, die aus dem Stand der Technik bekannten Nachteile zumindest zu lindern und insbesondere eine Packung von Brennstoffformkörpern vorzuschlagen, bei denen eine ausreichende Kühlung der Brennstoffformkörper ermöglicht wird. Gleichzeitig soll ein entsprechendes Verfahren zum Aufbau einer solchen Packung vorgeschlagen werden.

Diese Aufgaben werden gelöst durch die unabhängigen Ansprüche. Die jeweiligen abhängigen Ansprüche sind auf vorteilhafte Weiterbildung gerichtet.

Die erfindungsgemäße Packung von Brennstoffformkörpern umfasst mehrere Lagen von Brennstoffformkörpern, gemäß Anspruch 10.

Unter einem Brennstoffformkörper wird insbesondere ein Formkörper aus einem Material umfassend im Wesentlichen Kohle, insbesondere Braunkohle, verstanden. Bevorzugt ist hierbei eine Ausgestaltung, bei der der Brennstoffformkörper zumindest einen vorspringenden Teilbereich aufweist. Insbesondere weist der Brennstoffformkörper eine Ausgestaltung auf, bei der die Kontur des Brennstoffformkörpers einen zentral vorspringenden Teilbereich aufweist, der auf einer Seite einen Vorsprung und auf der anderen Seite eine mit dem Vorsprungs korrespondierende Ausnehmung bildet. Besonders bevorzugt stellt ein Brennstoffformkörper ein Brikett, insbesondere ein Kaminbrikett, dar. Jede Lage von Brennstoffformkörpern kann einerseits aus den Brennstoffformkörpern selbst und andererseits auch aus Lagen von Bündeln mehrerer Brennstoffformkörper aufgebaut werden. Unter einer Lage kann in diesem Zusammenhang auch eine gemittelte Lage verstanden werden, falls die Packung aus mehreren Lagen mit je unterschiedlichen Anzahlen von Brennstoffformkörpern ausgebildet ist. In diesem Falle kann unter der Summe der Querschnittsflächen der Brennstoffformkörper in einer Lage auch die Summe der Querschnittsflächen der gemittelten Anzahl Brennstoffformkörper pro Lage verstanden werden. Der Quotient der Summe der Kühlkanalumfänge im Querschnitt zur Summe der Querschnittsflächen der Brennstoffformkörper in einer Lage ist in einer bevorzugten Ausgestaltung größer als 2,0·10⁻³ mm⁻¹. Der Quotient der Summe der Umfänge der freien Querschnitte zur Summe der Querschnittsflächen der Brennstoffformkörper in einer Lage ist in einer bevorzugten Ausgestaltung größer als 2,0·10⁻³ mm⁻¹.

Die Kühlkanäle sind freie Teilbereiche, die nicht von Brennstoffformkörpern ausgefüllt sind sondern zwischen diesen liegen. Unter einem freien Querschnitt wird derjenige Bereich im Innern einer Lage der Packung verstanden, der nicht von Brennstoffformkörpern gefüllt ist. Unter einem Kühlkanal wird derjenige freie Querschnitt verstanden, der die Packung durch alle Lagen frei durchgängig durchquert. In einer bestimmten Lage können weitere freie Querschnitte vorliegen, die nicht von Brennstoffformkörpern ausgefüllt sind, jedoch nicht zum Kühlkanal selbst beitragen, da diese freien Querschnitte nicht in allen Lagen in Deckung zueinander ausgebildet sind, so dass sich kein entsprechender Kühlkanal bildet. Jedoch können freie Querschnitte ganz oder teilweise zu Kühlkanälen beitragen. Bevorzugt sind Ausgestaltungen der Packung, bei der mindestens zwei Kühlkanäle ausgebildet sind.

Es hat sich gezeigt, dass Brennstoffformkörperpackungen, bei denen die Bedingungen a), b) und/oder c) erfüllt sind, in vorteilhafter Weise eine gute Kühlung der einzelnen Brennstoffformkörper bei gleichzeitiger hoher Stabilität der entsprechenden Packung ermöglichen. In den Kühlkanälen können sich Konvektionsströmungen bilden, die eine Kühlung der Brennstoffformkörper ermöglichen. Bevorzugt sind die Kühlkanäle so ausgebildet, dass sie eine Verbindung mit der Umgebungsluft an zwei Stellen des Kanals, insbesondere oben und unten ermöglichen. Hierzu wird die Packung auf einem Träger ausgebildet, der in diesem Bereich eine entsprechende Aussparung aufweist. Allerdings hat sich gezeigt, dass bereits der Kontakt des Kühlkanals an einem Ende der Packung (bevorzugt dem oberen Rand der Packung) eine vorteilhafte Kühlung gewährleistet.

Durch die erfindungsgemäße Packung kann gewährleistet werden, dass die in der Packung befindlichen Brennstoffformkörper ausreichend gekühlt werden und gleichzeitig eine stabile Packung erhalten wird, die einen Transport der entsprechenden Packung auch über weitere Entfernungen ermöglicht. Insbesondere die Ausgestaltung relativ vieler kleinerer Kühlkanäle pro Lage der Packung, insbesondere unter Einhaltung der Bedingung b) und/oder c) hat sich als vorteilhaft erwiesen. Die Bedingung b) bewirkt, dass zwar relativ kleine Kühlkanäle gebildet werden können, diese jedoch jeweils noch so groß sind, dass Konvektion in einem signifikanten Maßstab in diesen Kühlkanälen ablaufen kann. Die Kühlkanäle in der erfindungsgemäßen Packung müssen nicht sämtlich gleiche Querschnitte aufweisen, es können Kühlkanäle unterschiedlicher Querschnittsformen und Querschnittsflächen ausgebildet sein.

Die Einhaltung der Bedingung c) ermöglicht es insbesondere, freie Querschnitte auszubilden, die nicht direkt am Kühlkanal gelegene Brennstoffformkörper und/oder Bündel von Brennstoffformkörpern mit diesem verbindet, so dass auch diese Bereiche der Packung ausreichend gekühlt werden.

Gemäß einer vorteilhaften Ausgestaltung der erfindungsgemäßen Packung wird die Packung aus Bündeln mehrerer Brennstoffformkörper aufgebaut.

Die Bündel können insbesondere Verpackungseinheiten mehrerer Brennstoffformkörpern darstellen, die an Endabnehmer verkäuflich sind. Hierbei handelt es sich insbesondere um Bündel aus einer solchen Anzahl von Brennstoffformkörpern, dass dieser ein Gewicht von etwa 10 kg und weniger aufweisen, da diese leicht vom Endabnehmer transportierbar sind. Insbesondere bevorzugt sind Bündel mit einer solchen Anzahl von Brennstoffformkörpern, dass diese ein Gewicht etwa 7,25 kg aufweisen. Die Brennstoffformkörper in dem Bündel sind bevorzugt lösbar miteinander verbunden, beispielsweise durch eine Schrumpffolie und/oder eine Umreifung.

Die erfindungsgemäße Packung von Brennstoffformkörpern kann dann durch die entsprechende Anordnung einer Mehrzahl solcher Bündel erhalten werden. Insbesondere werden eine Mehrzahl von Bündeln zu einer Lage und dann eine Mehrzahl Lagen zu einer Packung angeordnet. Die Kühlkanäle können dann durch zumindest Teile des freien Querschnitts zwischen den Bündeln gebildet werden. Hierbei können sich die Anordnungen einer Lage zur anderen unterscheiden, so dass auch komplexe Geometrien von Kühlkanälen ausgebildet werden können.

Gemäß einer weiteren vorteilhaften Ausgestaltung der erfindungsgemäßen Packung sind zumindest ein Teil der Bündel aus mehreren Teillagen von Brennstoffformkörpern aufgebaut, wobei zumindest eine Teillage aus einer ersten Anzahl von Brennstoffformkörpern aufgebaut ist, die sich von einer zweiten Anzahl der Brennstoffformkörper mindestens einer weiteren Teillage des Bündels unterscheidet.

Dies bedeutet insbesondere, dass das Bündel eine nicht quaderförmige Geometrie aufweist, da mindestens eine Lage sich in der Anzahl der in ihr enthaltenen Brennstoffformkörper von den anderen Lagen unterscheidet. Dies bewirkt eine Oberfläche des Bündels, die vorspringende und rückspringende Teilbereiche ausbildet. Werden nun zwei oder mehrere solcher Bündel aneinander gelegt, so lassen aufgrund dieser vorspringenden und rückspringenden Teilbereiche der Oberfläche der Bündel auf einfache Art und Weise Kühlkanäle ausbilden. Es ist so insbesondere einfach möglich, die oben gegebenen Bedingungen a), b) und/oder c) zu erfüllen. Durch die entsprechende Ausgestaltung der Bündel können so relativ viele kleine Kühlkanäle innerhalb der Packung erzeugt werden. Hier ist es besonders vorteilhaft, eine bestimmte Anordnung der Bündel in einer Lage zu wählen, so dass die Bedingung a), b) und/oder c) erfüllt wird und dann die darauf folgenden aufliegenden weiteren Lagen durch eine identische Anordnung der Bündel in der jeweiligen Lage auszubilden. So entstehen in vorteilhafter Weise Kühlkanäle, die die gesamte Packung von Brennstoffformkörpern in vertikaler Richtung durchziehen. Diese vertikalen Kühlkanäle ermöglichen in vorteilhafter Weise konvektive Strömungen, um die noch in den Brennstoffformkörpern vorhandene und/oder durch Reaktionen des Brennstoffs entstehende Wärme abzuführen. Dies ist insbesondere auch dann möglich, wenn die Bündel zumindest an Teilen ihrer Oberfläche durch Folie zusammengehalten werden.

Gemäß einer weiteren Ausgestaltung der erfindungsgemäßen Packung wird mindestens ein Kühlkanal zumindest teilweise durch die sich durch die Unterschiede der ersten und der zweiten Anzahl ergebenen Oberflächenbereiche der Bündel gebildet.

Durch die unterschiedliche Anzahl von Brennstoffformkörpern in den jeweiligen Teillagen der einzelnen Bündel erhält dieses eine Kontur mit rückspringenden und vorspringenden Teilbereichen. Diese können in einfacher Weise zur Bildung des mindestens einen Kühlkanals unter Erfüllung der Bedingung a), b) und/oder c) genutzt werden.

Gemäß einer weiteren vorteilhaften Ausgestaltung der erfindungsgemäßen Packung sind die Bündel so aufgebaut, dass deren Oberfläche vorspringende Teilbereiche aufweist. Vorspringende und rückspringende Teilbereiche der Oberfläche der Bündel können auf einfach Art und Weise vorteilhaft zur Bildung des mindestens einen Kühlkanals unter Erfüllung der Bedingungen a), b) und/oder c) herangezogen werden.

Gemäß einer weiteren vorteilhaften Ausgestaltung der erfindungsgemäßen Packung steht jedes Bündel in konvektivem Wärmekontakt mit mindestens einem der folgenden Bereiche:
i) mit mindestens einem Kühlkanal und
ii) mit einer äußeren Oberfläche der Packung.

Unter konvektivem Wärmekontakt wird verstanden, dass eine Temperaturgetriebene Konvektionsströmung und ein Wärmetransport von jedem Bündel zu mindestens einem. Kühlkanal und/oder einer Außenoberfläche der Packung möglich ist. Hierdurch wird gewährleistet, dass eine entsprechende Kühlung entweder durch den mindestens einen Kühlkanal und/oder die äußere Oberfläche der Packung erfolgen kann. Jedes Bündel ist damit in der Lage, die entstehende oder noch vorhandene Wärme an einen Kühlkanal oder die äußere Oberfläche der Packung abzuführen.

Gemäß einer weiteren vorteilhaften Ausgestaltung der erfindungsgemäßen Packung ist zumindest ein Teil der Bündel asymmetrisch.

Unter einem asymmetrischen Bündel wird verstanden, dass nicht in Bezug auf zwei zueinander senkrechte Raumachsen symmetrisch ist, insbesondere dass das Bündel nicht quaderförmig ist. Insbesondere wird hierunter ein Bündel verstanden, bei dem mindestens eine der äußeren Teillagen des Bündels länger ist als die jeweils anderen Teillagen. Das kann dadurch erreicht werden, dass eine Teillage, beispielsweise die unterste oder die oberste Teillage mehr Brennstoffformkörper aufweist als die anderen Teillagen.

Durch ein asymmetrisches Bündel ist es besonders einfacher Weise möglich, entsprechende Kühlkanäle aufzubauen. Diese können durch eine entsprechende Anordnung der asymmetrischen Bündel durch die längeren Teillagen des Bündels begrenzt ausgebildet werden.

Gemäß einer weiteren vorteilhaften Ausgestaltung der erfmdungsgemäßen Packung umfassen die Brennstoffformkörper Braunkohle. Insbesondere handelt es sich um Braunkohlebriketts. Die Brennstoffformkörper werden insbesondere zu mindestens 95 Gew.-% aus Braunkohle ausgebildet, bevorzugt zu zumindest 99 % oder mehr. Insbesondere werden die Brennstoffformkörper durch Verpressen von Braunkohlestaub hergestellt.

Brennstoffformkörper aus Braunkohle oder umfassend im Wesentlichen Braunkohle sind besonders oxidativen Prozessen auf der Oberfläche der Brennstoffformkörper unterworfen, so dass Braunkohleformkörper oftmals zur Selbstentzündung neigen. Insbesondere bei warmem Wetter stellt dies ein nicht unerhebliches Risiko dar, welches durch die erfindungsgemäße Packung überwunden werden kann.

Gemäß einem weiteren Aspekt der vorliegenden Erfindung wird ein Verfahren zum Aufbau einer Packung von Brennstoffformkörpern gemäß Anspruch 10 vorgeschlagen.

Bedingung a) entspricht einem Quotienten zwischen 0,01 und 0,042. Die Bedingung b) und c) beschreibt eine vorteilhafte untere Grenze für die nötige Wärmetauschfläche, um eine genügende Kühlung der Brennstoffformkörper auch bei warmen Umgebungstemperaturen zu gewährleisten. Diese Wärmetauscherfläche in den Kühlkanälen berücksichtigt neben Auskühleffekten der Brennstoffformkörper auch oxidative Effekte an der Oberfläche der Brennstoffformkörper, die zu einer weiteren Erhitzung der Brennstoffformkörper führen können.

Gemäß einer vorteilhaften Ausgestaltung des erfindungsgemäßen Verfahrens wird die Packung aus Bündeln aus mehreren Brennstoffformkörpern aufgebaut.

Jedes Bündel umfasst mehrere Teillagen aus jeweils mehreren Brennstoffformkörpern. Diese Bündel werden bevorzugt lagenweise aufgebaut, so dass die Packung aus beispielsweise 4 oder 5 Lagen solcher Brennstoffformkörperbündel aufgebaut wird.

Gemäß einer weiteren vorteilhaften Ausgestaltung des erfindungsgemäßen Verfahrens ist mindestens ein Teil der Bündel asymmetrisch.

Dies bedeutet, dass die jeweiligen Teillagen der Bündel aus unterschiedlichen Anzahlen von Brennstoffformkörpern aufgebaut werden. So ist es beispielsweise möglich, dass eine Teillage eine größere Anzahl Brennstoffformkörper umfasst als eine andere Teillage. Bevorzugt ist eine Ausgestaltung, bei der eine Teillage des Bündels länger ist als die anderen Teillagen. Unter asymmetrisch wird hier insbesondere eine nicht quaderförmige Kontur des Bündels verstanden.

Gemäß einer weiteren vorteilhaften Ausgestaltung des erfindungsgemäßen Verfahrens werden die Brennstoffformkörper in einer erfindungsgemäßen Packung angeordnet.

Allgemein kann das erfindungsgemäße Verfahren insbesondere zum Aufbau einer erfindungsgemäßen Packung eingesetzt werden.

Die für die erfindungsgemäße Packung offenbarten Details und Vorteile lassen sich ohne Weiteres auf das erfindungsgemäße Verfahren anwenden und übertragen und umgekehrt. Im Folgenden soll die Erfindung anhand der beigefügten Figuren näher erläutert werden, ohne dass sie auf die dort gezeigten Ausführungsbeispiele beschränkt wäre. Es zeigen schematisch:
- Figur 1 bis Figur 5: ein erstes Ausführungsbeispiel einer erfindungsgemäßen Packung in verschiedenen Ansichten;
- Figur 6 bis Figur 8: ein zweites Ausführungsbeispiel einer erfindungsgemäßen Packung in verschiedenen Ansichten;
- Figur 9 bis Figur 11: ein drittes Ausführungsbeispiel einer erfindungsgemäßen Packung in verschiedenen Ansichten;
- Figur 12 bis Figur 14: ein viertes Ausführungsbeispiel einer erfindungsgemäßen Packung in verschiedenen Ansichten;
- Figur 15 bis Figur 17: ein fünftes Ausführungsbeispiel einer erfindungsgemäßen Packung in verschiedenen Ansichten;
- Figur 18 bis Figur 20: ein sechstes Ausführungsbeispiel einer erfindungsgemä- ßen Packung in verschiedenen Ansichten;
- Figur 21 bis Figur 24: ein siebtes Ausführungsbeispiel einer erfindungsgemäßen Packung in verschiedenen Ansichten;
- Figur 25 bis Figur 27: ein achtes Ausführungsbeispiel einer erfindungsgemäßen Packung in verschiedenen Ansichten; und
- Figur 28: ein Beispiel eines Brennstoffformkörpers im Querschnitt.

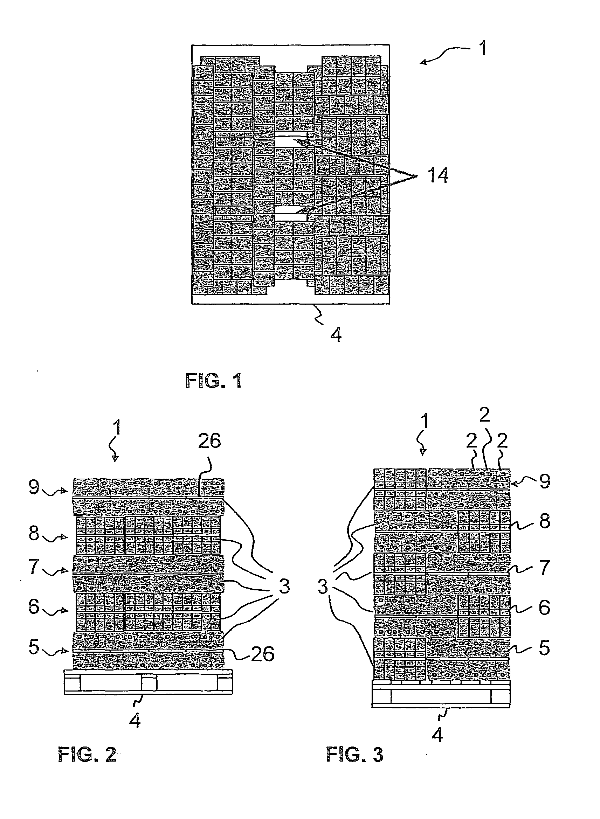

Die Figuren 1 bis 5 zeigen schematisch ein erstes Ausführungsbeispiel einer erfindungsgemäßen Packung von Brennstoffformkörpern 2. Bei den Brennstoffformkörpern 2 handelt es sich um Braunkohlebriketts. Diese Brennstoffformkörper 2 sind in mehreren Lagen 3 angeordnet. Wie Figur 2 zeigt, ist die Packung 1 auf einem Träger 4 ausgebildet. Bei dem Träger 4 handelt es sich um eine Palette, bevorzugt um eine Europalette oder Kleinpalette. Im Ausführungsbeispiel gemäß Figuren 1 bis 5 handelt es sich um eine Kleinpalette, die im Wesentlichen halb so groß ausgebildet ist wie eine Europalette. Auf dem Träger 4 liegt eine erste Lage 5, auf dieser eine zweite Lage 6, auf dieser eine dritte Lage 7, auf dieser eine vierte Lage 8 und auf dieser als oberste Lage eine fünfte Lage 9. Jede dieser Lagen 3, 5, 6, 7, 8, 9 ist aus mehreren Bündeln 10 von Brennstoffformkörpern 2 gebildet.

Im vorliegenden Ausführungsbeispiel umfasst jedes Bündel 10 eine erste Teillage 11 umfassend eine erste Anzahl von Brennstoffformkörpern 2, die in diesem Ausführungsbeispiel bei fünf liegt. Weiterhin sind eine zweite Teillage 12 und dritte Teillage 13 von Brennstoffformkörpern 2 ausgebildet, die jeweils eine zweite Anzahl von Brennstoffformkörpern 2 aufweisen, die bei vier liegt.

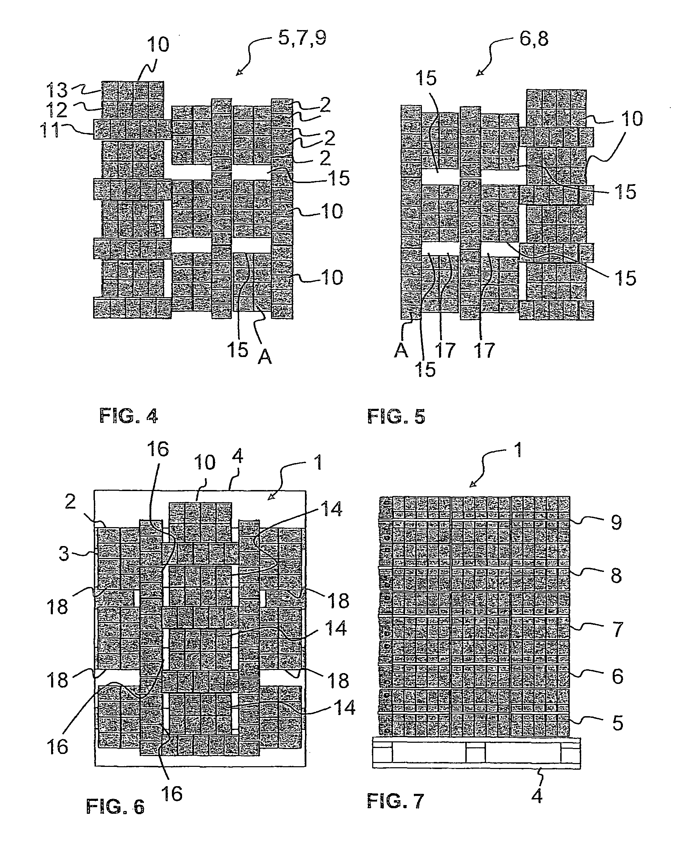

Die Figuren 4 und 5 zeigen die unterschiedlichen Lagen 3 aus Bündeln 10 im Querschnitt. Figur 4 zeigt eine Anordnung von Bündeln 10, die zur Bildung der ersten Lage 5, der dritten Lage 7 und der fünften Lage 9 der Packung 1 ausgebildet werden. Figur 5 zeigt schematisch im Querschnitt die Anordnung der Bündel 10 zur Bildung der zweiten Lage 6 und der vierten Lage 8. Die entsprechende Anordnung der Bündel 10 in der Packung 1 zeigen auch die Figuren 2 und 3 schematisch in verschiedenen seitlichen Ansichten. Die Figur 1 zeigt eine Ansicht der Packung 1 von oben. Hierbei sind die gebildeten Kühlkanäle 14 zu sehen, die durch die gesamte Packung 1 der Brennstoffformkörper 2 vertikal frei durchströmbar sind.

Die entsprechende Packung 1 weist einen Quotienten der Summe der Querschnittsflächen der Kühlkanäle 14 zu der Summe der Querschnittsflächen der Brennstoffformkörper 2 einer Lage 3 von etwa 0,025 auf, der also zwischen 0,01 und 0,042 liegt. In Figur 1 weisen die Kühlkanäle 14 eine Querschnittsfläche A auf. Die Summe der Querschnittsflächen einzelner Brennstoffformkörper 2 in den Lagen 3, beispielsweise gemäß Figur 4 und Figur 5, wird durch die dort sichtbaren Querschnittsflächen der Brennstoffformkörper 2 durch Summation berechnet.

Figuren 4 und 5 zeigen, dass es weitere freie Querschnitte 15 gibt, die nicht direkt im Kühlkanal 14 liegen, jedoch eine Verbindung von Brennstoffformkörpern zu den gebildeten Kühlkanälen 14 herstellen.

In Figur 1 ist der Kühlkanalumfang 16 jedes Kühlkanals 14 sichtbar. Die Summe dieser Kühlkanalumfänge ist mit der Summe der Querschnittsflächen der Brennstoffformkörper in einer der Lagen 5, 6, 7, 8, 9 gemäß Figur 4 oder Figur 5 in Relation setzbar. Der Quotient aus diesen beiden Größen liegt bei diesem Ausführungsbeispiel bei etwa 0,00172 und ist dabei erfindungsgemäß größer als 1,5·10⁻³ mm⁻¹.

Figur 4 und Figur 5 ist ferner zu entnehmen, dass die freien Querschnitte 15 durch Umfänge 17 begrenzt werden. Unter freiem Querschnitt 15 wird hier ein Bereich einer Lage 3 verstanden, der nicht von Brennstoffformkörpern 2 ausgefüllt ist, aber außenseitig durch Brennstoffformkörper 2 begrenzt ist. Es handelt sich hierbei somit um freie Querschnitte 15 im Inneren der Packung 1. Die von Lage 5, 6, 7, 8, 9 zur Lage 5, 6, 7, 8, 9 überlappenden freien Querschnitte 15 bilden die Kühlkanäle 14. Der Quotient aus der Summe der Umfänge 17 der freien Querschnitte 15 zur Summe der Querschnittsflächen der Brennstoffformkörper 2 in einer Lage 5, 6, 7, 8, 9 liegt hierbei erfindungsgemäß bei etwa 0,0057 mm⁻¹.

Die Einhaltung der Bedingung a), b) und/oder c) bewirkt, dass eine genügend große Wärmetauschfläche zwischen den Brennstoffformkörpern und den Kühlkanälen gegeben ist. Die Bereiche der freien Querschnitte 15, die nicht zu den Kühlkanälen 14 beitragen, belüften jedoch weitere Brennstoffformkörper 2. Die über die Höhe der Packung 1 ausgebildete inhomogene Form der Kühlkanäle 14 und der freien Querschnitte 15 bewirkt eine besonders gute Belüftung der Brennstoffformkörper 2.

In den Figuren 6 bis 8 ist ein weiteres Ausführungsbeispiel einer erfindungsgemäßen Packung 1 von Brennstoffformkörpern 2 dargestellt. Hierbei zeigt Figur 6 schematisch eine Aufsicht auf die Packung 1. Diese ist erneut aus einer ersten Lage 5 auf einem Träger 4, einer darüber liegenden zweiten Lage 6, einer darüber liegenden dritten Lage 7, einer darüber liegenden vierten Lage 8 und einer darüber liegenden fünften Lage 9 ausgebildet.

Jede der Lagen 5, 6, 7, 8, 9 ist aus Bündeln 10 von Brennstoffformkörpern 2 ausgebildet. Die einzelnen Bündel 10 sind so ausgebildet wie im Ausführungsbeispiel zu den Figuren 1 bis 5 beschrieben. Die strukturiert gestaltete Außenoberfläche der Packung mit den Rücksprüngen 18 bewirkt neben den Kühlkanälen 14 eine weitere gute Kühlung der Packung 1 von außen. Die Kühlkanäle 14 weisen weiterhin Kühlkanalumfänge 16. Der Quotient aus der Summe dieser Kühlkanalumfänge 16 und der Summe der Querschnittsflächen der Brennstoffformkörper 2 in einer der Lagen 3 liegt erfindungsgemäß im Bereich zwischen 0,01 und 0,042. Der Quotient aus der Summe der Kühlkanalumfänge 16 zur Summe der Querschnittsflächen der Brennstoffformkörper 2 in einer der Lagen 3 ist hier etwa 0,0045 mm⁻¹.

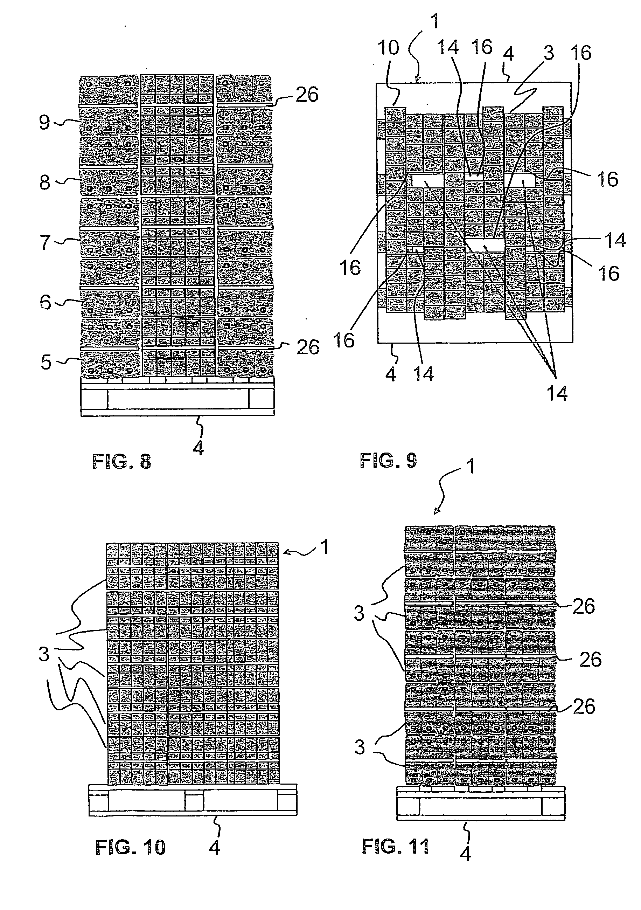

Figur 9 bis Figur 11 zeigen schematisch ein drittes Ausführungsbeispiel einer erfindungsgemäßen Packung 1 von Brennstoffformkörpern 2. Diese Packung 1 besteht aus fünf identischen Lagen 3, wie in Figur 9 schematisch im Querschnitt dargestellt, auf einem Träger 4. Figur 10 und Figur 11 zeigen seitliche Ansichten der Packung 1. In Figur 9 sind die Kühlkanäle 14 mit den entsprechenden Kühlkanalumfängen 16 zu erkennen. Die Summe der Querschnittsflächen der Kühlkanäle 14 zu der Summe der Querschnittsflächen der Brennstoffformkörper 2 einer Lage 3 liegt hier bei etwa 0,042. Weiterhin ist der Quotient der Summe der Kühlkanalumfänge 16 zur Summe der Querschnittsflächen der Brennstoffformkörper 2 in einer Lage 3 hier etwa 0,0044 mm⁻¹. Auch diese erfindungsgemäße Packung 1 ermöglicht eine vorteilhafte Kühlung der Brennstoffformkörper 2 durch die Kühlkanäle 14 bei gleichzeitiger Transportstabilität, die beispielsweise durch Umreifen mit Umreifungsbändern 26 erhöht werden kann. Diese Umreifungsbänder 26 können bei allen hier ausgeführten Ausführungsbeispielen von Packungen 1 ausgebildet sein und sind teilweise exemplarisch mit Bezugszeichen versehen.

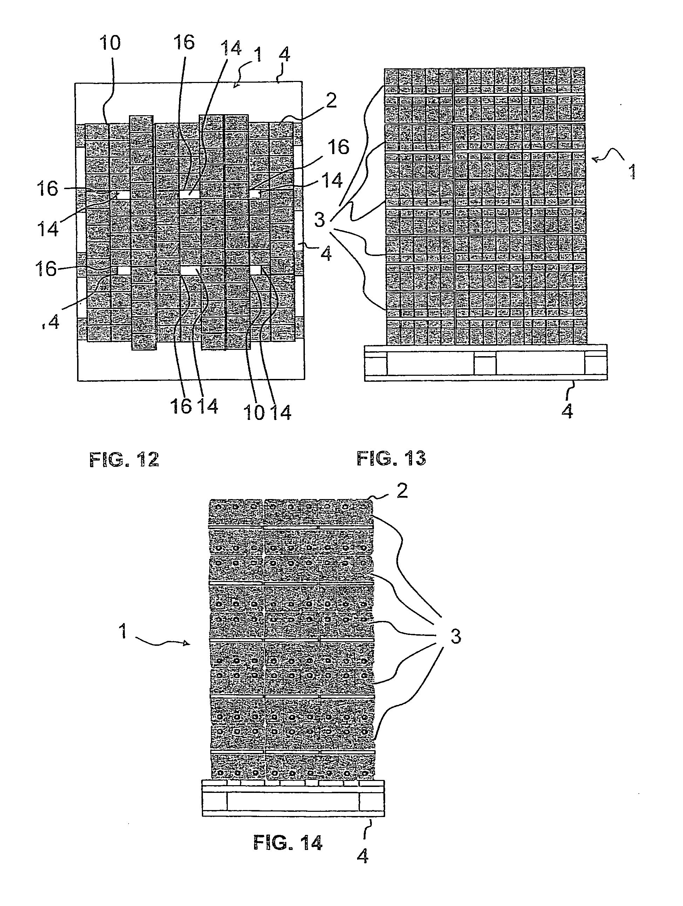

Die Figuren 12 bis 14 zeigen ein weiteres Ausführungsbeispiel einer erfindungsgemäßen Packung 1 im Querschnitt bzw. in Aufsicht (Figur 12) sowie in seitlichen Ansichten (Figuren 13 und 14). Die Packung 1 dieses Ausführungsbeispiels besteht aus fünf identischen Lagen 3, die auf einem Träger - einer Kleinpalette - angeordnet sind. Diese bilden durch die asymmetrische Ausgestaltung der einzelnen Bündel 10, die wie in den ersten Ausführungsbeispielen beschrieben ausgebildet sind, Kühlkanäle 14 mit Kühlkanalumfängen 16, die über die Höhe der Packung 1 homogen sind. Durch diese Kühlkanäle 14 kann in vorteilhafter Weise ein Wärmeaustausch der Brennstoffformkörper 2 mit der Umgebung erfolgen. Der Quotient der Summe der Querschnittsflächen der Kühlkanäle 14 zu der Summe der Querschnittsflächen der Brennstoffformkörper 2 einer Lage 3 liegt in diesem Ausführungsbeispiel bei etwa 0,023. Weiterhin liegt der Quotient der Summe der Kühlkanalumfänge 16 zur Summe der Querschnittsflächen der Brennstoffformkörper 2 in einer Lage 3 bei etwa 0,031 mm⁻¹.

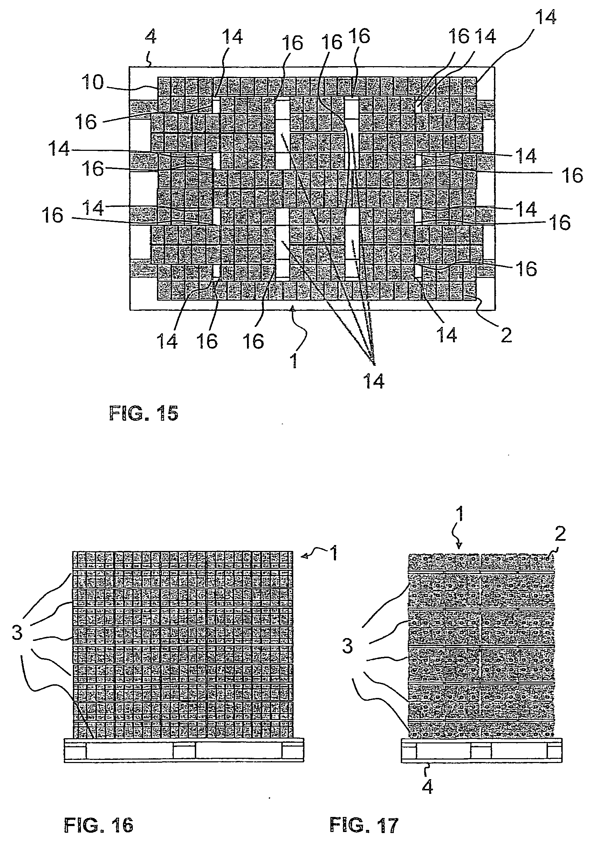

Die Figuren 15 bis 17 zeigen ein weiteres Ausführungsbeispiel einer erfindungsgemäßen Packung 1. Diese ist aus fünf Lagen 3, die identisch gemäß Figur 15 ausgebildet sind, aufgebaut und liegt auf einem Träger 4. Es handelt sich hierbei um eine Europalette, auf die Bündel 10 jeweils eines Gewichtes von etwa 7,25 kg jeweils bestehend aus dreizehn Braunkohlenbriketts ähnlich wie in den bisher gezeigten Ausführungsbeispielen aufgebaut ist. Die Packung 1 weist vier große Kühlkanäle 14 im zentralen Bereich auf. Seitlich schließen sich jeweils weitere Kühlkanäle 14 an.

Die Kühlkanäle 14 und die Kühlkanalumfänge 16 sind so ausgestaltet, dass die Summe der Kühlkanalumfänge 16 zur Summe der Querschnittsflächen der Brennstoffformkörper 2 in einer Lage 3 größer ist als 0,0049 mm⁻¹.

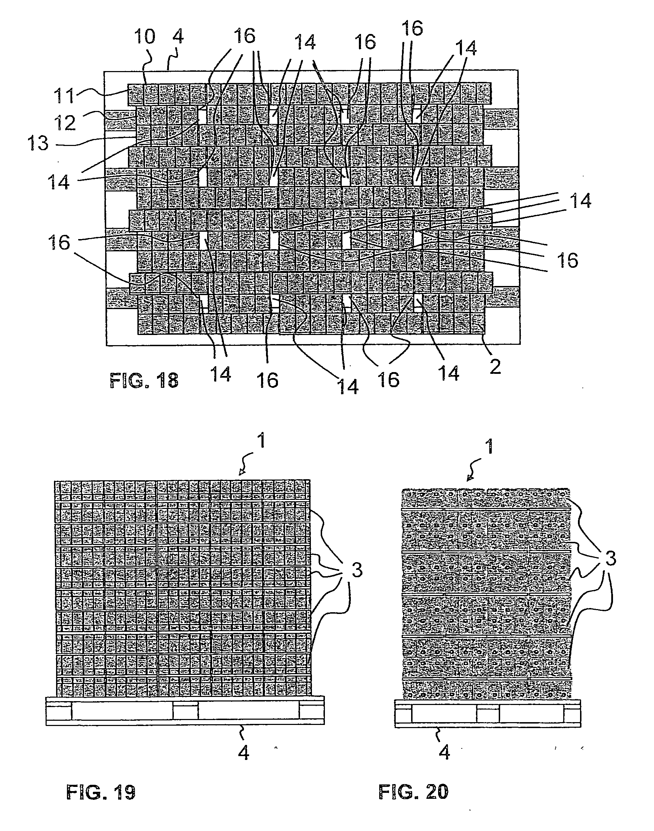

Die Figuren 18 bis 20 zeigen schematisch ein weiteres Ausführungsbeispiel einer erfindungsgemäßen Packung 1 von Brennstoffformkörpern 2. Figur 18 zeigt einen Querschnitt einer Lage 3 bzw. eine Aufsicht auf die Packung 1. Die Figuren 19 und 20 zeigen zwei seitliche Ansichten einer entsprechenden erfindungsgemäßen Packung 1. Hierbei besteht die Packung 1 aus fünf identischen Lagen 3. Jede dieser Lagen 3 ist aus zwanzig Bündeln 10 ausgebildet. Jedes Bündel 10 ist - wie bei den bisher gezeigten Ausführungsbeispielen - asymmetrisch aus einer ersten Teillage 11 mit fünf Briketts und darauf aufliegenden zweiten zwölf und dritten Teillage 13 mit jeweils vier Brennstoffformkörpern 2 gebildet. Auch diese Packung 1 erfüllt die Bedingung a) und b). Der Quotient der Summe der Querschnittsflächen der Kühlkanäle 14 zu der Summe der Querschnittsflächen der Brennstoffformkörper 2 beträgt in diesem Ausführungsbeispiel etwa 0,028, der Quotient der Summe der Kühlkanalumfänge 16 zu der Summe der Querschnittsflächen der Brennstoffformkörper 2 beträgt etwa 0,0037 mm⁻¹. Dieser ist in diesem Ausführungsbeispiel, wie auch bei anderen Erfindungsgemäßen Packungen 1 von Brennstoffformkörpern 2 identisch zum Quotienten der Summe der Umfänge der freien Querschnitte 15 zur Summe der Querschnittsflächen der Brennstoffformkörper 2 in einer Lage 3.

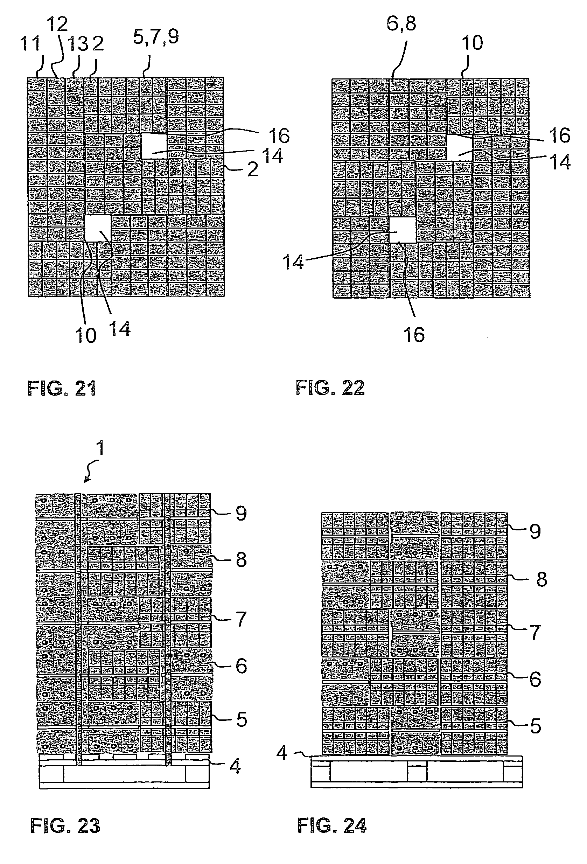

Die Figuren 21 bis 24 zeigen schematisch ein weiteres Ausführungsbeispiel einer Packung 1 von Brennstoffformkörpern 2 auf einem Träger 4. Der Träger 4 stellt in diesem Ausführungsbeispiel eine Kleinpalette dar. Zur Bildung der Packung 1 werden eine erste Lage 5 gemäß Figur 21 auf dem Träger 4 angeordnet. Auf diese ersten Lage 5 wird eine zweite Lage 6 gemäß Figur 22 angeordnet. Auf die zweite Lage 6 wird eine dritte Lage 7 gemäß Figur 21 angeordnet. Auf die dritte Lage 7 wird eine vierte Lage 8 gemäß Figur 22 angeordnet. Auf die vierte Lage 8 wird eine fünfte Lage 9 gemäß Figur 21 angeordnet. Jede der Lagen 5, 6, 7, 8, 9 besteht aus 9 Bündeln 10. Im Gegensatz zu den bisher gezeigten Ausführungsbeispielen umfasst jedes der Bündel 10 eine erste Teillage 11, eine zweite Teillage 12 und eine dritte Teillage 13, die jeweils identisch aus fünf Brennstoffformkörpern 2 ausgebildet sind. Das Bündel 10 dieses Ausführungsbeispiel hat eine Masse von etwa 10 kg. Die Lagen 5, 6, 7, 8, 9 bilden Kühlkanäle 14 mit Kühlkanalumfängen 16. Der Quotient der Summe der Querschnittsflächen der Kühlkanäle 14 zu der Summe der Querschnittsflächen der Brennstoffformkörper 2 in einer Lage 5, 6, 7, 8, 9 liegt in diesem Ausführungsbeispiel bei etwa 0,0034. Der Quotient der Summe der Umfänge der freien Querschnitte 15 zur Summe der Querschnittsflächen der Brennstoffformkörper 2 in einer Lage 5, 6, 7, 8,9 beträgt in diesem Ausführungsbeispiel etwa 0,0016 mm⁻¹.

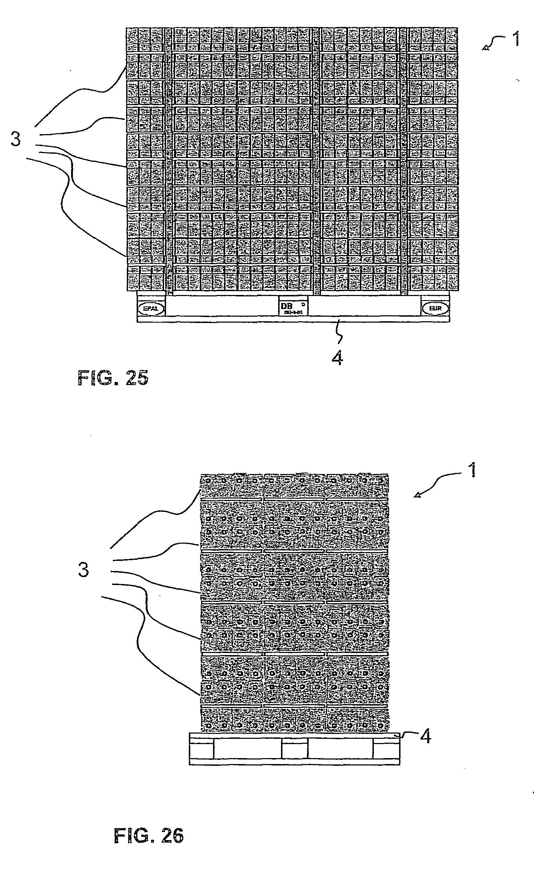

Die Figuren 25 bis 27 zeigen ein weiteres Ausführungsbeispiel einer erfindungsgemäßen Packung 1 von Brennstoffformkörpern 2. Die Packung 1 ist aus fünf identischen Lagen 3 von jeweils neun Bündeln 10 von Brennstoffformkörpern 2 aufgebaut. Jedes der Bündel besteht hierbei aus einer ersten Teillage 11 mit einer ersten Anzahl von Brennstoffformkörpern 2, die neun beträgt. Auch die zweite Teillage 12 umfasst neun Brennstoffformkörper, während die dritte Teillage 13 eine zweite Anzahl 8 von Brennstoffformkörpern 2 umfasst. Folglich sind auch diese Bündel 10 asymmetrisch, da diese keine quaderförmige Geometrie aufweisen. Die Bündel 10 bilden Kühlkanäle 14 mit Kühlkanalumfängen 16. Der Quotient der Summe der Querschnittsflächen der Kühlkanäle pro Lage zu der Summe der Querschnittsflächen der Brennstoffformkörper einer Lage liegt in diesem Ausführungsbeispiel bei etwa 0,027, der Quotient der Summe Kühlkanalumfänge 16 zur Summe der Querschnittsflächen der Brennstoffformkörper 2 in einer Lage 3 beträgt in diesem Ausführungsbeispiel etwa 0,0017.

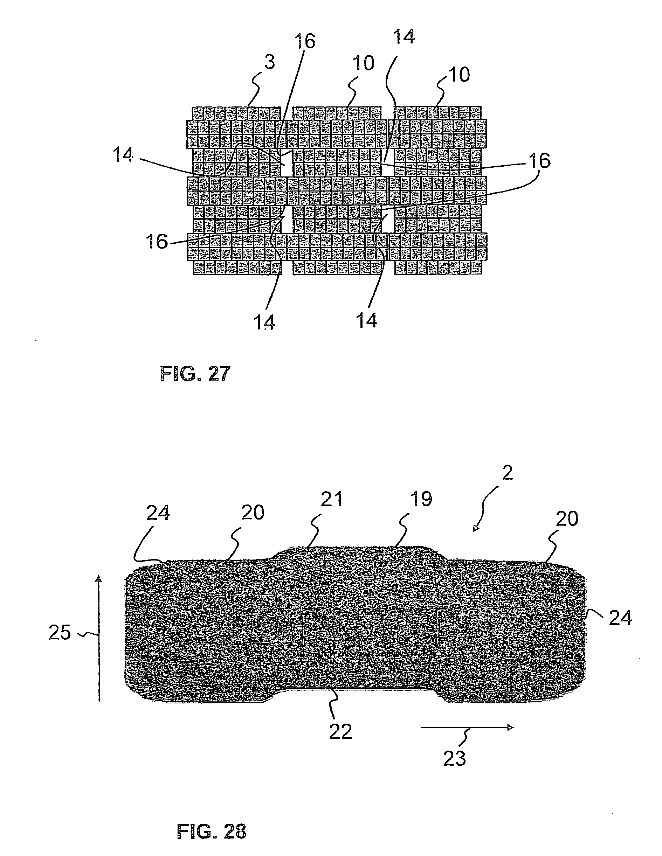

Figur 28 zeigt eine Ansicht eines Brennstoffformkörpers 2, der ein Braunkohlenbrikett darstellt. Die Kontur dieses Brennstoffformkörpers 2 weist einen vorspringenden Teilbereich 19 zentral zwischen zwei rückspringenden Teilbereichen 20 auf. Der vorspringende Teilbereich 19 und die rückspringenden Teilbereiche 20 bilden einseitig einen Vorsprung 21, dem auf der entgegengesetzten Seite eine Ausnehmung 22 entspricht. Werden verschiedene Brennstoffformkörper aufeinander gestapelt, so bewirken die in die Ausnehmung 22 eines benachbarten Brennstoffformkörpers 2 eingreifenden Vorsprünge 21 eine Verriegelung der Brennstoffformkörper 2 gegeneinander in eine erste Raumrichtung 23.

Weiterhin weist der Brennstoffformkörper 2 Verriegelungselemente 24 auf. Auf der entgegengesetzten Seite des Brennstoffformkörpers sind korrespondierende Verriegelungselemente 24 ausgebildet, die mit den Verriegelungselementen 24 auf der anderen Seite in Eingriff gebracht werden können. Dies bewirkt eine Verriegelung beim Stapeln von Brennstoffformkörpern 2 in einer zweiten Raumrichtung 24. Entsprechende Bündel 10 von Brennstoffformkörpern 2 sind somit gegen ein Verschieben von benachbarten Brennstoffformkörpern 2 in zwei Raumrichtungen gesichert. Weitere Sicherungsmöglichkeiten um die einzelnen Bündel 10 herum, beispielsweise in Form von einer Folienumschweißung oder in Form einer Umreifung der einzelnen Bündel 10, sowie der einzelnen Lagen 3, 5, 7, 8, 9 durch beispielsweise eine oder mehrere Umreifungen in unterschiedlichen Raumrichtungen sowie eine Sicherung der gesamten Packung 1 durch Umreifung sind möglich.

Die erfindungsgemäße Packung 1 erlaubt den Transport und die Lagerung von Brennstoffformkörpern 2, wobei die entsprechenden Packungen 1 stabil sind und insbesondere auch mehrere Packungen 1 aufeinander gestapelt werden können, wobei gleichzeitig gewährleistet ist, dass durch die Kühlkanäle 14 die Brennstoffformkörper 2 auch im Inneren der Packung 1 genügend Kühlluft erreicht, so dass eine Selbstentzündung vermieden werden kann.

### Bezugszeichenliste

- 1: Packung
- 2: Brennstoffformkörper
- 3: Lage
- 4: Träger
- 5: erste Lage
- 6: zweite Lage
- 7: dritte Lage
- 8: vierte Lage
- 9: fünfte Lage
- 10: Bündel
- 11: erste Teillage
- 12: zweite Teillage
- 13: dritte Teillage
- 14: Kühlkanal
- 15: freier Querschnitt
- 16: Kühlkanalumfang
- 17: Umfang
- 18: Rücksprung
- 19: vorspringender Teilbereich
- 20: rückspringender Teilbereich
- 21: Vorsprung
- 22: Ausnehmung
- 23: erste Raumrichtung
- 24: Verriegelungselement
- 25: zweite Raumrichtung
- 26: Umreifungsband

## Patentansprüche

1. Packung (1) von Brennstoffformkörpern (2) auf einem Träger (4), umfassend mehrere Lagen (3, 5, 6, 7, 8, 9) von Brennstoffformkörpern (2), wobei die Brennstoffformkörper (2) so angeordnet sind, dass sich mindestens ein durchströmbarer Kühlkanal (14) in der Packung (1) bildet, **dadurch gekennzeichnet, dass** mindestens eine der folgenden Bedingungen erfüllt ist:
a) der Quotient
- der Summe der Querschnittsflächen des mindestens einen Kühlkanals (14)
- zu der Summe der Querschnittsflächen der Brennstoffformkörper (2) einer Lage (3, 5, 6, 7, 8, 9)
liegt zwischen 1·10⁻² und 4,2 ·10⁻²;
b) der Quotient
- der Summe der Kühlkanalumfänge (16)
- zur Summe der Querschnittsflächen der Brennstoffformkörper (2) in einer Lage (3, 5, 6, 7, 8, 9)
größer als 1,5·10⁻³ mm⁻¹; und
c) der Quotient
- der Summe der Umfänge (17) der freien Querschnitte (15)
- zur Summe der Querschnittsflächen der Brennstoffformkörper (2) in einer Lage (3, 5, 6, 7, 8, 9)
größer als 1,5·10⁻³ mm⁻¹ und
wobei der Träger (4) in einem Bereich des mindestens einen Kühlkanals (14) eine Aussparung aufweist.

2. Packung (1) nach Anspruch 1, bei der die Packung (1) aus Bündeln (10) mehrerer Brennstoffformkörper (2) aufgebaut wird.

3. Packung (1) nach Anspruch 2, bei der zumindest ein Teil der Bündel (10) aus mehreren Teillagen (11, 12, 13) von Brennstoffformkörpern (2) aufgebaut sind, wobei zumindest eine Teillage (11) aus einer ersten Anzahl von Brennstoffformkörpern (2) aufgebaut ist, die sich von einer zweiten Anzahl der Brennstoffformkörper (2) mindestens einer weiteren Teillage (12, 13) des Bündels (10) unterscheidet.

4. Packung (1) nach Anspruch 3, bei der mindestens ein Kühlkanal (14) zumindest teilweise durch die sich durch die Unterschiede der ersten und der zweiten Anzahl ergebenden Oberflächenbereiche der Bündel (10) gebildet wird.

5. Packung (1) nach einem der Ansprüche 2 bis 4, bei der die Bündel (10) so aufgebaut sind, dass deren Oberfläche vorspringende Teilbereiche (19) aufweisen.

6. Packung (1) nach Anspruch 5, bei der die Kühlkanäle (14) zumindest teilweise durch die vorspringenden Teilbereiche (19) der Bündel (10) gebildet werden.

7. Packung (1) nach einem der Ansprüche 2 bis 6, bei der jedes Bündel (10) in konvektivem Wärmekontakt mit mindestens einem der folgenden Bereiche steht:
i) mit mindestens einem Kühlkanal (14) und
ii) einer äußeren Oberfläche der Packung (1).

8. Packung (1) nach einem der Ansprüche 2 bis 7, bei der zumindest ein Teil der Bündel (10) asymmetrisch ist.

9. Packung (1) nach einem der vorhergehenden Ansprüche, bei der die Brennstoffformkörper (2) Braunkohle umfassen.

10. Verfahren zum Aufbau einer Packung (1) von Brennstoffformkörpern (2) auf einem Träger (4), umfassend mehrere Lagen (3, 5, 6, 7, 8, 9) von Brennstoffformkörpern (2), wobei die Brennstoffformkörper (2) so angeordnet werden, dass sich mindestens ein durchströmbarer Kühlkanal (14) in der Packung (1) bildet, **dadurch gekennzeichnet, dass** die Brennstoffformkörper (2) so gepackt werden, dass die entstehende Packung (1) mindestens eine der folgenden Bedingungen erfüllt:
a) der Quotient
- der Summe der Querschnittsflächen des mindestens einen Kühlkanals (14)
- zu der Summe der Querschnittsflächen der Brennstoffformkörper (2) einer Lage (3, 5, 6, 7, 8, 9)
liegt zwischen 1·10⁻² und 4,2·10⁻²;
b) der Quotient
- der Summe der Kühlkanalumfänge (16)
- zur Summe der Querschnittsflächen der Brennstoffformkörper (2) in einer Lage (3, 5, 6, 7, 8, 9)
größer als 1,5·10⁻³ mm⁻¹; und
c) der Quotient
- der Summe der Umfänge der freien Querschnitte
- zur Summe der Querschnittsflächen der Brennstofffiormkörper in einer Lage
größer als 1,5·10⁻³ mm⁻¹ und
wobei der Träger (4) in einem Bereich des mindestens einen Kühlkanals (14) eine Aussparung aufweist.

11. Verfahren nach Anspruch 10, bei dem die Packung (1) aus Bündeln (10) aus mehreren Brennstoffformkörpern (2) aufgebaut wird.

12. Verfahren nach Anspruch 11, bei dem mindestens ein Teil der Bündel (10) asymmetrisch ist.

13. Verfahren nach einem der Ansprüche 10 bis 12, bei dem die Brennstoffformkörper (2) in einer Packung (1) nach einem der Ansprüche 1 bis 9 angeordnet werden.

## Claims

1. Pack (1) of fuel mouldings (2) on a carrier (4), comprising a plurality of layers (3, 5, 6, 7, 8, 9) of fuel mouldings (2), the fuel mouldings (2) being arranged such that at least one throughflow cooling duct (14) is formed in the pack (1), **characterized in that** at least one of the following conditions is fulfilled:
a) the quotient
- of the sum of the cross-sectional areas of the at least one cooling duct (14)
- in relation to the sum of the cross-sectional areas of the fuel mouldings (2) of a layer (3, 5, 6, 7, 8, 9)
lies between 1·10⁻² and 4.2·10⁻²;
b) the quotient
- of the sum of the cooling duct circumferences (16)
- in relation to the sum of the cross-sectional areas of the fuel mouldings (2) in a layer (3, 5, 6, 7, 8, 9)
is higher than 1.5·10⁻³ mm⁻¹; and
c) the quotient
- of the sum of the circumferences (17) of the free cross sections (15)
- in relation to the sum of the cross-sectional areas of the fuel mouldings (2) in a layer (3, 5, 6, 7, 8, 9)
is higher than 1.5·10⁻³ mm⁻¹, and
the carrier (4) having a clearance in a region of the at least one cooling duct (14).

2. Pack (1) according to Claim 1, in which the pack (1) is constructed from bundles (10) of a plurality of fuel mouldings (2).

3. Pack (1) according to Claim 2, in which at least some of the bundles (10) are constructed from a plurality of sublayers (11, 12, 13) of fuel mouldings (2), at least one sublayer (11) being constructed from a first number of fuel mouldings (2) which differs from a second number of fuel mouldings (2) of at least one further sublayer (12, 13) of the bundle (10).

4. Pack (1) according to Claim 3, in which at least one cooling duct (14) is formed at least partially by those surface regions of the bundles (10) which occur as a result of the differences between the first and the second number.

5. Pack (1) according to one of Claims 2 to 4, in which the bundles (10) are constructed such that their surface has projecting subregions (19).

6. Pack (1) according to Claim 5, in which the cooling ducts (14) are formed at least partially by the projecting subregions (19) of the bundles (10).

7. Pack (1) according to one of Claims 2 to 6, in which each bundle (10) is in convective thermal contact with at least one of the following regions:
i) with at least one cooling duct (14) and
ii) with an outer surface of the pack (1).

8. Pack (1) according to one of Claims 2 to 7, in which at least some of the bundles (10) are asymmetric.

9. Pack (1) according to one of the preceding claims, in which the fuel mouldings (2) comprise lignite.

10. Method for constructing a pack (1) of fuel mouldings (2) on a carrier (4), comprising a plurality of layers (3, 5, 6, 7, 8, 9) of fuel mouldings (2), the fuel mouldings (2) being arranged such that at least one throughflow cooling duct (14) is formed in the pack (1), **characterized in that** the fuel mouldings (2) are packaged such that the pack (1) obtained fulfils at least one of the following conditions:
a) the quotient
- of the sum of the cross-sectional areas of the at least one cooling duct (14)
- in relation to the sum of the cross-sectional areas of the fuel mouldings (2) of a layer (3, 5, 6, 7, 8, 9)
lies between 1·10⁻² and 4.2·10⁻²;
b) the quotient
- of the sum of the cooling duct circumferences (16)
- in relation to the sum of the cross-sectional areas of the fuel mouldings (2) in a layer (3, 5, 6, 7, 8, 9)
is higher than 1.5·10⁻³ mm⁻¹; and
c) the quotient
- of the sum of the circumferences of the free cross sections
- in relation to the sum of the cross-sectional areas of the fuel mouldings in a layer
is higher than 1.5·10⁻³ mm⁻¹, and
the carrier (4) having a clearance in a region of the at least one cooling duct (14).

11. Method according to Claim 10, in which the pack (1) is constructed from bundles (10) of a plurality of fuel mouldings (2).

12. Method according to Claim 11, in which at least some of the bundles (10) are asymmetric.

13. Method according to one of Claims 10 to 12, in which the fuel mouldings (2) are arranged in a pack (1) according to one of Claims 1 to 9.

## Revendications

1. Emballage (1) de corps de formage de combustible (2) sur un support (4), comprenant plusieurs couches (3, 5, 6, 7, 8, 9) de corps de formage de combustible (2), les corps de formage de combustible (2) étant disposés de telle sorte qu'au moins un canal de refroidissement (14) pouvant être parcouru par un écoulement soit formé dans l'emballage (1), **caractérisé en ce qu'**au moins l'une des conditions suivantes est satisfaite :
a) le quotient
- de la somme des surfaces en section transversale de l'au moins un canal de refroidissement (14)
- par la somme des surfaces en section transversale des corps de formage de combustible (2) d'une couche (3, 5, 6, 7, 8, 9)
se situe entre 1·10⁻² et 4,2· 10⁻²;
b) le quotient
- de la somme des pourtours (16) du canal de refroidissement
- par la somme des surfaces en section transversale des corps de formage de combustible (2) dans une couche (3, 5, 6, 7, 8, 9)
est supérieur à 1,5·10⁻³ mm⁻¹; et
c) le quotient
- de la somme des pourtours (17) des sections transversales libres (15)
- par la somme des surfaces en section transversale des corps de formage de combustible (2) dans une couche (3, 5, 6, 7, 8, 9)
est supérieur à 1,5·10⁻³ mm⁻¹ et
le support (4) présentant, dans une région de l'au moins un canal de refroidissement (14), un évidement.

2. Emballage (1) selon la revendication 1, dans lequel l'emballage (1) est constitué de faisceaux (10) de plusieurs corps de formage de combustible (2).

3. Emballage (1) selon la revendication 2, dans lequel au moins une partie des faisceaux (10) est constituée par plusieurs couches partielles (11, 12, 13) de corps de formage de combustible (2), au moins une couche partielle (11) étant constituée d'un premier nombre de corps de formage de combustible (2), qui est différent d'un deuxième nombre de corps de formage de combustible (2) d'au moins une autre couche partielle (12, 13) du faisceau (10).

4. Emballage (1) selon la revendication 3, dans lequel au moins un canal de refroidissement (14) est formé au moins en partie par les régions de surface des faisceaux (10) résultant des différences entre le premier et le deuxième nombre.

5. Emballage (1) selon l'une quelconque des revendications 2 à 4, dans lequel les faisceaux (10) sont constitués de telle sorte que leur surface présente des régions partielles saillantes (19).

6. Emballage (1) selon la revendication 5, dans lequel les canaux de refroidissement (14) sont formés au moins en partie par les régions partielles saillantes (19) des faisceaux (10).

7. Emballage (1) selon l'une quelconque des revendications 2 à 6, dans lequel chaque faisceau (10) est en contact thermique par convection avec au moins l'une des régions suivantes :
i) au moins un canal de refroidissement (14) et
ii) une surface extérieure de l'emballage (1).

8. Emballage (1) selon l'une quelconque des revendications 2 à 7, dans lequel au moins une partie des faisceaux (10) est asymétrique.

9. Emballage (1) selon l'une quelconque des revendications précédentes, dans lequel les corps de formage de combustible (2) comprennent du charbon brun.

10. Procédé pour former un emballage (1) de corps de formage de combustible (2) sur un support (4), comprenant plusieurs couches (3, 5, 6, 7, 8, 9) de corps de formage de combustible (2), les corps de formage de combustible (2) étant disposés de telle sorte qu'au moins un canal de refroidissement (14) pouvant être parcouru par un écoulement se forme dans l'emballage (1), **caractérisé en ce que** les corps de formage de combustible (2) sont emballés de telle sorte que l'emballage (1) produit satisfasse à au moins l'une des conditions suivantes :
a) le quotient
- de la somme des surfaces en section transversale de l'au moins un canal de refroidissement (14)
- par la somme des surfaces en section transversale des corps de formage de combustible (2) d'une couche (3, 5, 6, 7, 8, 9)
se situe entre 1·10⁻² et 4,2 ·10⁻²;
b) le quotient
- de la somme des pourtours (16) du canal de refroidissement
- par la somme des surfaces en section transversale des corps de formage de combustible (2) dans une couche (3, 5, 6, 7, 8, 9)
est supérieur à 1,5·10⁻³ mm⁻¹ ; et
c) le quotient
- de la somme des pourtours des sections transversales libres
- par la somme des surfaces en section transversale des corps de formage de combustible dans une couche est supérieur à 1,5·10⁻³ mm⁻¹ et
le support (4) présentant, dans une région de l'au moins un canal de refroidissement (14), un évidement.

11. Procédé selon la revendication 10, dans lequel l'emballage (1) est constitué de faisceaux (10) de plusieurs corps de formage de combustible (2).

12. Procédé selon la revendication 11, dans lequel au moins une partie des faisceaux (10) est asymétrique.

13. Procédé selon l'une quelconque des revendications 10 à 12, dans lequel les corps de formage de combustible (2) sont disposés dans un emballage (1) selon l'une quelconque des revendications 1 à 9.
